# FASCICULE DE BREVET EUROPEEN

(11) **EP 2 243 657 B1**
(45) Date de publication et mention de la délivrance du brevet: **16.05.2012**
(21) Numéro de dépôt: 10159971.0
(22) Date de dépôt: 15.04.2010
(51) Int. Cl.: B60N 2/02, B60N 2/12, B60N 2/20

(54) **Dispositif et procédé de contrôle du coulissement d'un siège rabattable de véhicule par détection de la position de son dossier par rapport à deux positions de référence**
Vorrichtung und Verfahren zum Kontrollieren der Verschiebung eines klappbaren Fahrzeugsitzes durch Ortung der Position dessen Rückenlehne gegenüber zwei Bezugspositionen
Device and method for controlling the sliding of a tiltable vehicle seat by detecting the position of its backrest relative to two reference positions

(30) Priorité: 21.04.2009 FR 0952588
(43) Date de publication de la demande: 27.10.2010
(73) Titulaire: Peugeot Citroën Automobiles SA, 78140 Vélizy-Villacoublay (FR)
(72) Inventeur: Foure, Franck, 90000, BELFORT (FR); Baltolu, Thomas, 90000, BELFORT (FR)
(74) Mandataire: Vigand, Régis Louis Michel

(56) Documents cités:
- EP-A1- 1 470 949
- DE-A1- 2 708 423
- FR-A1- 2 907 385
- US-A1- 2009 079 248

## Description

L'invention concerne les sièges (ou banquettes) rabattables et coulissant(e)s de véhicules, éventuellement automobiles, et plus précisément le contrôle du coulissement de tels sièges.

Certains véhicules, notamment automobiles, sont équipés de sièges qui sont rabattables et coulissants d'avant en arrière de manière à permettre à une personne ou un animal d'accéder à l'espace qui est situé derrière eux ou bien de quitter cet espace. Certains de ces sièges sont équipés d'un mécanisme de déverrouillage (comprenant généralement une poignée implantée sur la partie supérieure de leur dossier) qui permet, lorsqu'il est actionné, de déverrouiller le dossier qui est placé dans une première position de référence choisie dans laquelle il est redressé (et qui correspond par exemple à la position de conduite dans le cas du siège conducteur d'un véhicule automobile) afin de libérer sa rotation par rapport à l'assise pour le rabattre vers l'avant dans une seconde position de référence.

Une fois que le dossier déverrouillé a été complètement rabattu vers l'avant, un dispositif de contrôle du coulissement provoque le coulissement automatique du siège vers l'avant, à grande vitesse, jusqu'à ce qu'il atteigne une butée avant (mécanique ou virtuelle). De même, lorsque le siège est au niveau de sa butée mécanique avant et que son dossier est déverrouillé et entraîné en rotation vers l'arrière (redressé), le dispositif de contrôle du coulissement déclenche le coulissement automatique du siège vers l'arrière, à grande vitesse, jusqu'à ce qu'il parvienne dans sa dernière position d'utilisation (mémorisée).

Or, il peut arriver que dans certaines conditions d'utilisation, et notamment lorsque le mécanisme de déverrouillage a été actionné et qu'il ne s'est pas correctement remis dans l'état de base dans lequel il doit normalement se trouver lorsqu'il n'est pas actionné, le dispositif de contrôle du coulissement déclenche automatiquement le coulissement du siège, ce qui peut s'avérer (très) dangereux et/ou provoquer des dégâts ou blessures lorsque ce dernier est occupé ou qu'une personne, un animal ou un objet se trouve sur le trajet du siège.

L'invention a pour but de remédier au moins en partie à l'inconvénient précité au moyen d'un contrôle du coulissement du siège rabattable par détection de la position de son dossier par rapport à deux positions de référence.

Le document FR-A-2907385 décrit un dispositif de commande, respectivement un procédé de contôle selon les préambules des revendications 1 et 9.

Elle propose plus précisément à cet effet un dispositif, dédié au contrôle du coulissement d'un siège rabattable de véhicule (éventuellement automobile) comprenant une assise à coulissement contrôlé et un dossier monté à rotation contrôlée sur l'assise et propre, une fois sa rotation déverrouillée, à être entraîné en rotation libre entre une première position de référence choisie dans laquelle il est redressé et une seconde position de référence dans laquelle il est rabattu vers l'avant.

Ce dispositif de contrôle comprend :
- des moyens de détection agencés pour détecter la position dans laquelle est placé le dossier, et
- des moyens de contrôle agencés, en cas de déverrouillage de la rotation du dossier, pour autoriser le coulissement automatique effectuée par la motorisation, électrique ou non du siège vers l'avant, respectivement l'arrière, que lorsque le dossier est uniquement détecté dans sa seconde, respectivement première, position de référence par les moyens de détection,
- est caractérisé en ce que :
   ledit coulissement automatique est le coulissement effectué suite à la détection de certains états des moyens de détection, avantageusement de certains états détectés au niveau d'au moins deux capteurs distincts, sans commande de coulissement de la part d'un utilisateur.

Ainsi, même une défaillance dans la détection des positions du dossier de siège, notamment rabattue ou redressée, par exemple au travers d'une défaillance au niveau d'un des capteurs, ne suffira pas à provoquer un coulissement automatique du siège de manière intempestive, ou à tout le moins présentera moins de risques de provoquer un coulissement automatique du siège de manière intempestive.

Le dispositif de contrôle selon l'invention peut comporter d'autres caractéristiques qui peuvent être prises séparément ou en combinaison, et qui font l'objet des revendications dépendantes, notamment :
- ses moyens de contrôle peuvent être agencés, en cas de déverrouillage de la rotation du dossier, pour interdire tout coulissement automatique du siège lorsque ses moyens de détection détectent simultanément le dossier dans ses première et seconde positions de référence, à cause d'une défaillance de détection ;
- ses moyens de contrôle peuvent être agencés, en cas de déverrouillage de la rotation du dossier, pour interdire tout coulissement automatique du siège lorsque ses moyens de détection détectent le dossier ni dans sa première position de référence ni dans sa seconde position de référence ;
- ses moyens de détection peuvent comprendre des premier et second capteurs agencés pour détecter lorsque le dossier est respectivement dans ses première et seconde positions de référence ;
   ➢ le premier capteur peut être du type dit à contact, destiné à être solidarisé fixement à l'arrière de l'assise en un premier endroit choisi, et propre à être placé dans un premier état lorsqu'il est contacté par un élément, qui est solidarisé fixement à une partie d'extrémité inférieure du dossier, du fait que ce dernier est dans sa première position de référence, et dans un second état lorsqu'il n'est pas contacté par cet élément ;
   ➢ le second capteur peut être du type dit à contact, destiné à être solidarisé fixement à l'arrière de l'assise en un second endroit choisi, et propre à être placé dans un premier état lorsqu'il est contacté par un élément, solidarisé fixement à une partie d'extrémité inférieure du dossier, du fait que ce dernier est dans sa seconde position de référence, et dans un second état lorsqu'il n'est pas contacté par cet élément ;
   ➢ l'élément peut être une tige comprenant une première extrémité solidarisée fixement à un axe de rotation, lui-même solidarisé fixement à la partie d'extrémité inférieure du dossier, et une seconde extrémité opposée à la première extrémité et propre à venir contacter le premier capteur et/ou le second capteur.

De préférence, dans le dispositif selon l'invention, le coulissement automatique est automatiquement entraîné par un moteur électrique, sans commande de coulissement de la part d'un utilisateur.

L'invention propose également un procédé dédié au contrôle du coulissement d'un siège rabattable de véhicule (éventuellement automobile) comprenant une assise à coulissement contrôlé et un dossier monté à rotation contrôlée sur l'assise et propre, une fois sa rotation déverrouillée, à être entraîné en rotation libre entre une première position de référence choisie dans laquelle il est redressé et une seconde position de référence dans laquelle il est rabattu vers l'avant.

Ce procédé de contrôle consiste :
i) à déterminer la position dans laquelle est placé le dossier, et
ii) en cas de déverrouillage de la rotation du dossier, à n'autoriser le coulissement automatique du siège vers l'avant que lorsque le dossier est uniquement détecté dans sa seconde position de référence et vers l'arrière uniquement lorsque le dossier est détecté dans sa première position de référence,
ledit procédé de contrôle étant caractérisé en ce que ledit coulissement automatique est effectué suite à la détection de certains états des moyens de détection, sans commande de coulissement de lma part de l'utilisateur.

Par ailleurs, à l'étape ii), en cas de déverrouillage de la rotation du dossier, on peut par exemple interdire tout coulissement automatique du siège lorsque l'on détermine que le dossier est détecté simultanément dans sa première position de référence et dans sa seconde position de référence, à cause d'une défaillance de détection.

De plus, à l'étape ii), en cas de déverrouillage de la rotation du dossier, on peut par exemple interdire tout coulissement automatique du siège lorsque l'on détermine que le dossier est ni dans sa première position de référence ni dans sa seconde position de référence.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue de côté, un exemple de réalisation de dispositif de contrôle selon l'invention couplé à un exemple de siège rabattable dont le dossier est redressé dans une première position de référence choisie, et
- la figure 2 illustre schématiquement et fonctionnellement, dans une vue de côté, le dispositif de contrôle et le siège rabattable de la figure 1, avec le dossier du siège rabattu dans une seconde position de référence.

Les dessins annexés pourront non seulement servir à compléter l'invention, mais aussi contribuer à sa définition, le cas échéant.

L'invention a pour but d'offrir un dispositif (D) et un procédé dédiés au contrôle du coulissement d'un siège (ou banquette) rabattable (SI) de véhicule.

Dans ce qui suit, on considère, à titre d'exemple non limitatif, que le véhicule est de type automobile, comme par exemple une voiture. Mais, l'invention n'est pas limitée à ce type de véhicule. Elle concerne en effet tout type de véhicule équipé d'au moins un siège (ou banquette) rabattable dont le coulissement doit être contrôlé pour éviter certains incidents de fonctionnement.

Par ailleurs, on considère dans ce qui suit, à titre d'exemple non limitatif, que le siège (SI) fait partie du rang 1 d'une voiture à trois portes (telle qu'un coupé). Il est rappelé que le rang 1 est celui qui est situé à l'avant de l'habitacle de la voiture et qui comprend le siège du conducteur et le siège du passager avant. Mais, un siège auquel peut être couplé un dispositif de contrôle (D) selon l'invention peut faire partie de n'importe quel rang de siège(s) d'un véhicule dès lors qu'il est monté à coulissement contrôlé.

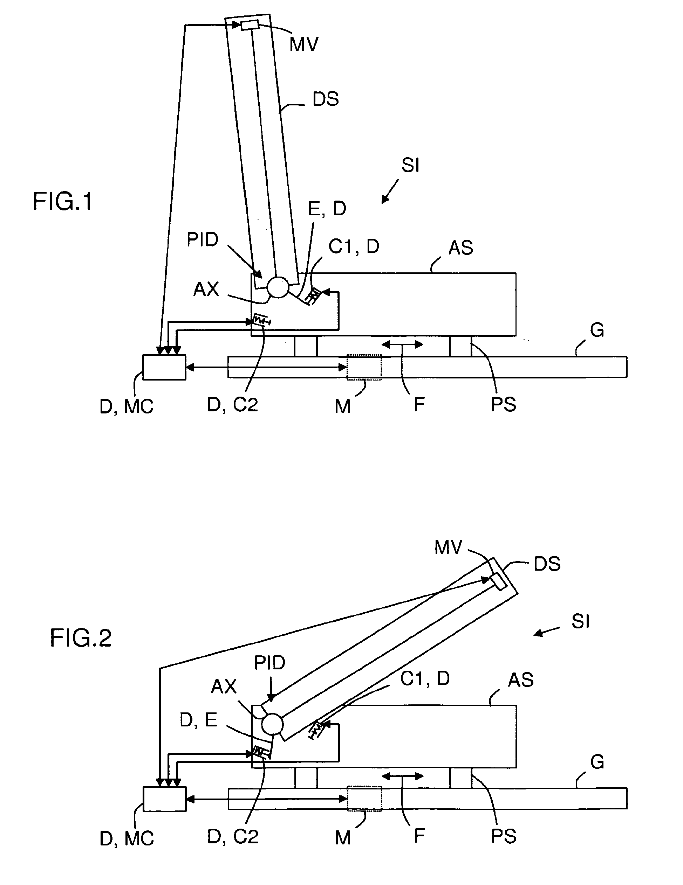

On a schématiquement représenté sur la figure 1 un exemple de siège rabattable SI couplé à un exemple de réalisation, non limitatif, de dispositif de contrôle D selon l'invention.

Le siège (rabattable) SI est ici destiné à être monté à coulissement sur la structure (plancher) d'une voiture. Il comprend une assise AS, munie de pieds PS montés (à coulissement contrôlé par un moteur M dans des glissières (ou sur des rails) G qui sont solidarisé(e)s à la structure de la voiture, et un dossier DS, muni dans une partie d'extrémité inférieure PID d'un axe de rotation AX (ou analogue) qui est monté à rotation contrôlée par un mécanisme d'entraînement en rotation sur la partie arrière de l'assise AS.

Le coulissement de l'assise AS par rapport aux glissières G est matérialisé par la flèche à double sens F sur les figures 1 et 2.

Le dossier DS est également muni d'un mécanisme de déverrouillage MV qui est couplé au mécanisme d'entraînement en rotation du dossier DS. Ce mécanisme de déverrouillage MV est chargé, lorsqu'il est actionné, de libérer la rotation de l'axe AX de sorte que le dossier DS puisse être entraîné librement en rotation vers l'avant ou vers l'arrière. En d'autres termes, le mécanisme de déverrouillage MV est chargé de découpler le dossier DS de son mécanisme d'entraînement en rotation. L'actionnement du mécanisme de déverrouillage MV peut par exemple se faire au moyen d'une poignée implantée (comme illustré non limitativement) dans la partie d'extrémité supérieure du dossier DS, qui est opposée à sa partie d'extrémité inférieure PID.

Lorsque le dossier DS est découplé de son mécanisme d'entraînement en rotation, il peut être librement entraîné en rotation d'une première position de référence choisie, illustrée sur la figure 1 et dans laquelle il est redressé (et qui correspond par exemple à la position de conduite dans le cas d'un siège conducteur) vers une seconde position de référence, illustrée sur la figure 2 et dans laquelle il est (quasiment) complètement rabattu vers l'avant (c'est-à-dire vers la face supérieure de l'assise AS), ou bien vers une position intermédiaire (ou position « morte ») située entre les première et seconde positions de référence, ou inversement.

Il est important de noter que la première position de référence (illustrée sur la figure 1) est dite choisie du fait qu'il s'agit de celle qui définit l'inclinaison que doit présenter le dossier DS par rapport à l'assise AS une fois qu'il a été redressé, et qui a été la plus récemment choisie par une personne pour son confort personnel ou du fait d'une contrainte temporaire. En d'autres termes il s'agit de la dernière position redressée qui a été mémorisée pour le dossier DS du siège SI considéré. Dans le cas du siège conducteur cette première position de référence contribue à la définition de la position de conduite.

Le dispositif de contrôle D comprend des moyens de détection C1 et C2 et des moyens de contrôle MC couplés entre eux.

Les moyens de détection C1 et C2 sont agencés de manière à détecter la position dans laquelle est placé le dossier DS.

Pour ce faire, et comme illustré non limitativement sur les figures 1 et 2, les moyens de détection C1 et C2 peuvent par exemple comprendre un premier capteur C1, chargé de détecter lorsque le dossier DS est dans sa première position de référence, et un second capteur C2 chargé de détecter lorsque le dossier DS est dans sa seconde position de référence.

Ces premier C1 et second C2 capteurs sont par exemple à deux états, un premier état signalant la détection du dossier DS dans sa première ou seconde position de référence et un second état signalant la non détection du dossier DS dans sa première ou seconde position de référence.

Ces états peuvent être de type logique (ils correspondent alors à un bit de données numériques dont les valeurs sont respectivement égales à 0 et 1) ou de type analogique (ils correspondent alors respectivement à deux valeurs de tension (ou de courant) différentes). Le type des états dépend du type du boîtier de commande (ou contrôle) et des capacités d'acquisition de l'information de ce dernier.

Plusieurs types de capteur peuvent être utilisés, et notamment ceux dits « à contact » et ceux dits « à détection de proximité » (par exemple inductifs, capacitifs ou photoélectriques). On notera que l'on peut éventuellement utiliser deux capteurs de types différents.

Dans l'exemple de réalisation non limitatif illustré sur les figures 1 et 2, les premier C1 et second C2 capteurs sont du type dit à contact, par exemple de type TOR.

Le premier capteur C1 est solidarisé fixement à l'arrière de l'assise AS en un premier endroit choisi. Dans l'exemple de réalisation non limitatif illustré sur les figures 1 et 2, le premier endroit choisi est un logement qui est situé à l'intérieur de l'assise AS. Mais, le premier endroit choisi pourrait être situé à l'extérieur de l'assise AS, par exemple en dessous de cette dernière (AS).

Le premier capteur C1 est propre à être placé dans un premier état lorsqu'il est contacté par un élément E, qui est solidarisé fixement à la partie d'extrémité inférieure PID du dossier DS, quand ce dernier (DS) est dans sa première position de référence (figure 1), et dans un second état lorsqu'il n'est pas contacté par cet élément E (figure 2).

Le second capteur C2 est solidarisé fixement à l'arrière de l'assise AS en un second endroit choisi. Dans l'exemple de réalisation non limitatif illustré sur les figures 1 et 2, le second endroit choisi est le logement qui est situé à l'intérieur de l'assise AS et qui contient le premier capteur C1. Mais, le second endroit choisi pourrait être situé à l'extérieur de l'assise AS, par exemple en dessous de cette dernière (AS).

Le second capteur C2 est propre à être placé dans un premier état lorsqu'il est contacté par l'élément E quand le dossier DS est dans sa seconde position de référence (figure 2), et dans un second état lorsqu'il n'est pas contacté par cet élément E (figure 1).

Par exemple, l'élément E est une tige (pas obligatoirement rectiligne, comme illustré non limitativement) qui comprend une première extrémité, solidarisée fixement à l'axe AX qui permet au dossier DS d'être entraîné en rotation par rapport à l'assise AS, et une seconde extrémité libre, opposée à la première extrémité et propre à venir contacter le premier C1, respectivement second C2, capteur lorsque le dossier DS est placé dans sa première, respectivement seconde, position de référence. On comprendra que lorsque la seconde extrémité libre de l'élément E exerce une pression suffisante sur une partie mobile (comme illustré) ou fixe (par exemple de type piézoélectrique ou un contact placé à un potentiel électrique choisi) le capteur C1 ou C2 passe de son second état (de non détection) à son premier état (de détection).

L'élément E est logé dans le même logement que celui qui contient les premier C1 et second C2 capteurs.

Les moyens de contrôle MC sont agencés, en cas de déverrouillage de la rotation du dossier DS, pour autoriser le coulissement du siège SI vers l'avant, respectivement l'arrière, lorsque le dossier DS n'est détecté que dans sa seconde, respectivement première, position de référence par les moyens de détection C1 et C2 (ici deux capteurs).

On notera que les moyens de contrôle MC peuvent être informés du déverrouillage de la rotation du dossier DS soit directement par le mécanisme de déverrouillage MV (comme illustré non limitativement), soit par un autre équipement du véhicule (par exemple le boîtier de gestion du siège SI).

En d'autres termes, en présence des deux capteurs C1 et C2 et en cas de déverrouillage de la rotation du dossier DS :
- si le second capteur C2 détecte le dossier DS dans sa seconde position de référence (et donc est placé dans son premier état), et que dans le même temps le premier capteur C1 ne détecte pas le dossier DS (et donc est placé dans son second état), alors les moyens de contrôle MC en déduisent qu'ils doivent autoriser le coulissement du siège SI vers l'avant,
- si le premier capteur C1 détecte le dossier DS dans sa première position de référence (et donc est placé dans son premier état), et que dans le même temps le second capteur C2 ne détecte pas le dossier DS (et donc est placé dans son second état), alors les moyens de contrôle MC en déduisent qu'ils doivent autoriser le coulissement du siège SI vers l'arrière.

Il est important de noter que les moyens de contrôle MC peuvent adresser des instructions d'autorisation de coulissement ou d'interdiction de coulissement soit directement au moteur M qui est chargé de faire coulisser le siège SI (comme illustré non limitativement), soit à des moyens de commande (non représentés) qui sont chargés de contrôler précisément le positionnement des différents organes réglables du siège SI en fonction d'instructions fournies par un passager par actionnement d'organes de commande.

Ces moyens de contrôle MC peuvent être également agencés, en cas de déverrouillage de la rotation du dossier DS, de manière à interdire tout coulissement du siège SI lorsque les moyens de détection C1 et C2 détectent simultanément le dossier DS dans ses première et seconde positions de référence (ce qui se traduit par le placement des deux capteurs C1 et C2 dans leur premier état). On comprendra que cette situation ne peut survenir qu'en cas de défaillance de l'un des deux capteurs C1 et C2, et plus précisément lorsque l'un des deux capteurs (par exemple C1) est dans son premier état du fait de son interaction avec l'élément E, alors que l'autre capteur (par exemple C2) est resté bloqué dans son premier état alors même qu'il n'interagit plus (ou pas) avec l'élément E (en raison d'un dysfonctionnement).

Par ailleurs, les moyens de contrôle MC peuvent être également agencés, en cas de déverrouillage de la rotation du dossier DS, de manière à interdire tout coulissement du siège SI lorsque les moyens de détection C1 et C2 détectent simultanément le dossier DS ni dans sa première position de référence ni dans sa seconde position de référence (ce qui se traduit par le placement des deux capteurs C1 et C2 dans leur second état). On comprendra que cette situation survient chaque fois que le dossier DS se trouve placé dans une position intermédiaire (ou position « morte ») située entre ses première et seconde positions de référence. Dans ce type de situation, il est en effet préférable d'interdire le coulissement du siège SI afin d'éviter que ce dernier (SI) ne soit translaté alors même que sa position n'est pas verrouillé. Cela permet en effet d'éviter tout coulissement non souhaité, notamment en phase de roulage, lorsque le mécanisme de déverrouillage MV a été actionné et qu'il ne s'est pas correctement remis dans l'état de base dans lequel il doit normalement se trouver lorsqu'il n'est pas actionné. Il est rappelé que c'est l'actionnement du mécanisme de déverrouillage MV combiné à l'entraînement en rotation du dossier DS vers l'avant ou vers l'arrière qui déclenche automatiquement le coulissement à grande vitesse du siège SI.

On notera que grâce à la gestion des états dans lesquels sont placés les capteurs C1 et C2, les moyens de contrôle MC peuvent être éventuellement en mesure d'interdire tout entraînement en rotation motorisé du dossier DS lorsque le mécanisme de déverrouillage a été actionné. En effet, dans ce cas le dossier DS est découplé du mécanisme qui l'entraîne en rotation et donc il est particulièrement avantageux d'empêcher que ce mécanisme d'entraînement en rotation ne soit actionné par un passager afin qu'il ne soit pas endommagé du fait du découplage. Plus généralement, on peut gérer toutes les demandes de translation du siège SI et d'inclinaison du dossier DS en fonction de la position de ce dernier (DS) :
- lorsque le dossier DS est dans sa première position de référence (complètement redressé), toutes les demandes de translation motorisée vers l'avant ou vers l'arrière et toutes les demandes d'inclinaison motorisée peuvent être autorisées,
- lorsque le dossier DS est dans sa seconde position de référence (complètement rabattu), on peut interdire toute demande de translation motorisée vers l'avant ou vers l'arrière et toute demande d'inclinaison motorisée,
- lorsque le dossier DS est dans une position intermédiaire, on peut interdire toute demande d'inclinaison motorisée et n'autoriser que les demandes de translation motorisée vers l'arrière.

Les moyens de contrôle MC du dispositif de contrôle D selon l'invention peuvent être réalisés sous la forme de circuits électroniques, de modules logiciels (ou informatiques), ou d'une combinaison de circuits électroniques et de modules logiciels.

Par ailleurs, les moyens de contrôle MC peuvent éventuellement faire partie du boîtier (ou module) qui est chargé de gérer le siège SI, notamment pour une question de limitation des coûts. Mais, cela n'est pas obligatoire. Ils peuvent en effet constituer un boîtier de contrôle qui est couplé au boîtier de gestion du siège SI.

Il est important de noter que l'invention peut être également considérée sous l'angle d'un procédé de contrôle, pouvant être notamment mis en oeuvre au moyen d'un dispositif de contrôle D du type de celui présenté ci-avant. Les fonctionnalités offertes par la mise en oeuvre du procédé selon l'invention étant identiques à celles offertes par le dispositif de contrôle D présenté ci-avant, seule la combinaison de fonctionnalités principales offerte par le procédé est présentée ci-après.

Ce procédé de contrôle consiste :
i) à déterminer la position dans laquelle est placé le dossier DS, et
ii) en cas de déverrouillage de la rotation du dossier DS, à n'autoriser le coulissement du siège SI vers l'avant, respectivement l'arrière, que si l'on détermine que le dossier DS est dans sa seconde, respectivement première, position de référence.

L'invention ne se limite pas aux modes de réalisation de dispositif de contrôle et de procédé de contrôle décrits ci-avant, seulement à titre d'exemple, mais elle englobe toutes les variantes que pourra envisager l'homme de l'art dans le cadre de l'invention telle que définie par les revendications ci-après.

## Revendications

1. Dispositif (D) de contrôle du coulissement d'un siège rabattable (SI) de véhicule comprenant une assise (AS) à coulissement contrôlé, et un dossier (DS) monté à rotation contrôlée sur ladite assise (AS) et propre, une fois sa rotation déverrouillée, à être entraîné en rotation libre entre une première position de référence choisie dans laquelle il est redressé et une seconde position de référence dans laquelle il est rabattu vers l'avant, comprenant
i) des moyens de détection (C1, C2) agencés pour détecter la position dans laquelle est placé ledit dossier (DS), et
ii) des moyens de contrôle (MC) agencés, en cas de déverrouillage de la rotation du dossier (DS), pour autoriser le coulissement automatique effectué par une motorisation, électrique ou non dudit siège (SI) vers l'avant, respectivement l'arrière, uniquement lorsque ledit dossier (DS) est détecté dans sa seconde, respectivement première, position de référence par lesdits moyens de détection (C1, C2),
**caractérisé en ce que** ledit coulissement automatique est un coulissement effectué suite à la détection de certains états des moyens de détection, sans commande de coulissement de la part d'un utilisateur.

2. Dispositif selon la revendication 1, **caractérisé en ce que** lesdits moyens de contrôle (MC) sont agencés, en cas de déverrouillage de la rotation du dossier (DS), pour interdire tout coulissement automatique dudit siège (SI) lorsque lesdits moyens de détection (C1, C2) détectent simultanément ledit dossier (DS) dans ses première et seconde positions de référence, à cause d'une défaillance de détection.

3. Dispositif selon l'une des revendications 1 et 2, **caractérisé en ce que** lesdits moyens de contrôle (MC) sont agencés, en cas de déverrouillage de la rotation du dossier (DS), pour interdire tout coulissement automatique dudit siège (SI) lorsque lesdits moyens de détection (C1, C2) détectent ledit dossier (DS) ni dans sa première position de référence ni dans sa seconde position de référence.

4. Dispositif selon l'une des revendications 1 à 3, **caractérisé en ce que** lesdits moyens de détection (C1, C2) comprennent des premier (C1) et second (C2) capteurs agencés pour détecter lorsque ledit dossier (DS) est respectivement dans ses première et seconde positions de référence.

5. Dispositif selon la revendication 4, **caractérisé en ce que** ledit premier capteur (C1) est du type dit à contact, destiné à être solidarisé fixement à l'arrière de ladite assise (AS) en un premier endroit choisi, et propre à être placé dans un premier état lorsqu'il est contacté par un élément (E), solidarisé fixement à une partie d'extrémité inférieure (PID) dudit dossier (DS), du fait que ce dernier (DS) est dans sa première position de référence, et dans un second état lorsqu'il n'est pas contacté par ledit élément (E).

6. Dispositif selon l'une des revendications 4 et 5, **caractérisé en ce que** ledit second capteur (C2) est du type dit à contact, destiné à être solidarisé fixement à l'arrière de ladite assise (AS) en un second endroit choisi, et propre à être placé dans un premier état lorsqu'il est contacté par un élément (E), solidarisé fixement à une partie d'extrémité inférieure (PID) dudit dossier (DS), du fait que ce dernier (DS) est dans sa seconde position de référence, et dans un second état lorsqu'il n'est pas contacté par ledit élément (E).

7. Dispositif selon l'une des revendications 5 et 6, **caractérisé en ce que** ledit élément (E) est une tige comprenant une première extrémité solidarisée fixement à un axe de rotation, lui-même solidarisé fixement à ladite partie d'extrémité inférieure (PID) du dossier (DS), et une seconde extrémité opposée à la première extrémité et propre à venir contacter ledit premier capteur (C1) et/ou ledit second capteur (C2).

8. Dispositif selon l'une quelconque des revendications précédentes, **caractérisé en ce que** le coulissement automatique est automatiquement entraîné par un moteur électrique, sans commande de coulissement de la part d'un utilisateur.

9. Procédé de contrôle du coulissement d'un siège rabattable (SI) de véhicule comprenant une assise (AS) à coulissement contrôlé, et un dossier (DS) monté à rotation contrôlée sur ladite assise (AS) et propre, une fois sa rotation déverrouillée, à être entraîné en rotation libre entre une première position de référence choisie dans laquelle il est redressé et une seconde position de référence dans laquelle il est rabattu vers l'avant consistant
i) à déterminer la position dans laquelle est placé ledit dossier (DS), et
ii) en cas de déverrouillage de la rotation du dossier (DS), à n'autoriser le coulissement automatique effectué par une motorisation, électrique ou non dudit siège (SI) vers l'avant, respectivement l'arrière, uniquement lorsque ledit dossier (DS) est détecté dans sa seconde, respectivement première, position de référence,
**caractérisé en ce que** ledit coulissement automatique est un coulissement effectué suite à la détection de certains états des moyens de détection, sans commande de coulissement de la part d'un utilisateur.

10. Procédé selon la revendication 9, **caractérisé en ce qu'**à l'étape ii) en cas de déverrouillage de la rotation du dossier (DS), on interdit tout coulissement automatique du siège (SI) lorsque ledit dossier (DS) est détecté simultanément dans sa première position de référence et dans sa seconde position de référence, à cause d'une défaillance de détection.

11. Procédé selon l'une des revendications 9 et 10, **caractérisé en ce qu'**à l'étape ii) en cas de déverrouillage de la rotation du dossier (DS), on interdit tout coulissement automatique du siège (SI) lorsque ledit dossier (DS) est ni dans sa première position de référence ni dans sa seconde position de référence.

12. Utilisation du dispositif de contrôle (D) selon l'une des revendications 1 à 8 et du procédé de contrôle selon l'une des revendications 9 à 11 pour le contrôle du coulissement automatique d'un siège rabattable (SI) d'un véhicule automobile.

## Claims

1. A device (D) for controlling the sliding of a foldable seat (SI) of a vehicle including a seat pan (AS) with controlled sliding, and a backrest (DS) mounted with controlled rotation on the said seat pan (AS) and suited, once its rotation is released, to be entrained in free rotation between a first selected reference position in which it is straightened and a second reference position in which it is folded towards the front, **characterized in that** it includes i) detection means (C1, C2) arranged to detect the position in which the said backrest (DS) is placed, and ii) control means (MC) arranged, in the case of releasing of the rotation of the backrest (DS), to permit the automatic sliding of the said seat (SI) towards the front, or respectively the rear, when the said backrest (DS) is detected only in its second, or respectively first, reference position by the said detection means (C1, C2).

2. The device according to Claim 1, **characterized in that** the said control means (MC) are arranged, in the case of releasing of the rotation of the backrest (DS), to prohibit any automatic sliding of the said seat (SI) when the said detection means (C1, C2) detect simultaneously the said backrest (DS) in its first and second reference positions, owing to a detection failure.

3. The device according to one of Claims 1 and 2, **characterized in that** the said control means (MC) are arranged, in the case of releasing of the rotation of the backrest (DS), to prohibit any automatic sliding of the said seat (SI) when the said detection means (C1, C2) detect the said backrest (DS) neither in its first reference position nor in its second reference position.

4. The device according to one of Claims 1 to 3, **characterized in that** the said detection means (C1, C2) include first (C1) and second (C2) sensors arranged to detect when the said backrest (DS) is respectively in its first and second reference positions.

5. The device according to Claim 4, **characterized in that** the said first sensor (C1) is of the type designated a contact sensor, intended to be integrated fixedly at the rear of the said seat pan (AS) at a first selected location, and suited to be placed in a first state when it is contacted by an element (E), integrated fixedly to a lower end portion (PID) of the said backrest (DS), owing to the fact that the latter (DS) is in its first reference position, and in a second state when it is not contacted by the said element (E).

6. The device according to one of Claims 4 and 5, **characterized in that** the said second sensor (C2) is of the type designated a contact sensor, intended to be integrated fixedly at the rear of the said seat pan (AS) at a second selected location, and suited to be placed in a first state when it is contacted by an element (E), integrated fixedly to a lower end portion (PID) of the said backrest (DS), owing to the fact that the latter (DS) is in its second reference position, and in a second state when it is not contacted by the said element (E).

7. The device according to one of Claims 5 and 6, **characterized in that** the said element (E) is a rod including a first end integrated fixedly to a rotation axis, which itself is integrated fixedly to the said lower end portion (PID) of the backrest (DS), and a second end, opposite the first end and suited to come to contact the said first sensor (C1) and/or the said second sensor (C2).

8. The device according to any one of the preceding claims, **characterized in that** the automatic sliding is automatically entrained by an electric motor, without a sliding command on the part of a user.

9. A control method of the sliding of a foldable seat (SI) of a vehicle including a seat pan (AS) with controlled sliding, and a backrest(DS) mounted with controlled rotation on the said seat pan (AS) and suited, once its rotation is released, to be entrained in free rotation between a first selected reference position in which it is straightened and a second reference position in which it is folded towards the front, **characterized in that** it consists i) in determining the position in which the said backrest (DS) is placed, and ii) in the case of releasing of the rotation of the backrest (DS), in only permitting the automatic sliding of the said seat (SI) towards the front, or respectively the rear, when the said backrest (DS) is detected in its second, or respectively first, reference position.

10. The method according to Claim 9, **characterized in that** at ii) in the case of releasing of the rotation of the backrest (DS), any automatic sliding of the seat (SI) is prohibited when the said backrest (DS) is detected simultaneously in its first reference position and in its second reference position, owing to a detection failure.

11. The method according to one of Claims 9 and 10, **characterized in that** at ii) in the case of releasing of the rotation of the backrest (DS), any automatic sliding of the seat (SI) is prohibited when the said backrest (DS) is neither in its first reference position nor in its second reference position.

12. A use of the control device (D) according to one of Claims 1 to 8 and of the control method according to one of Claims 9 to 11 for control of the automatic sliding of a foldable seat (SI) of a motor vehicle.

## Patentansprüche

1. Vorrichtung (D) zum Steuern des Gleitens eines herunterklappbaren Sitzes (SI) eines Fahrzeugs, der eine Sitzfläche (AS) mit gesteuertem Gleiten und eine Rückenlehne (DS) aufweist, die mit gesteuerter Drehung auf die Sitzfläche (AS) montiert ist und, sobald ihre Drehung entriegelt ist, in Drehung frei zwischen einer ersten ausgewählten Bezugsposition, in der sie aufgerichtet ist, und einer zweiten Bezugsposition, in der sie nach vorn heruntergeklappt ist, angetrieben werden kann, **dadurch gekennzeichnet, dass** sie i) Mittel zum Erfassen (C1, C2) aufweist, die eingerichtet sind, um die Position zu erfassen, in der sich die Rückenlehne (DS) befindet, und ii) Steuermittel (MC), die eingerichtet sind, um in dem Fall des Entriegelns der Drehung der Rückenlehne (DS) das automatische Gleiten des Sitzes (SI) jeweils nach vorn und nach hinten nur zu gestatten, wenn die Rückenlehne (DS) nur in ihrer zweiten beziehungsweise ersten Bezugsposition von den Erfassungsmitteln (C1, C2) erfasst wird.

2. Vorrichtung nach Anspruch 1, **dadurch gekennzeichnet, dass** die Steuermittel (MC) eingerichtet sind, um bei einem Entriegeln der Drehung der Rückenlehne (DS) jedes automatische Gleiten des Sitzes (SI) zu untersagen, wenn die Erfassungsmittel (C1, C2) die Rückenlehne (DS) aufgrund eines Versagens des Erfassens gleichzeitig in ihrer ersten und zweiten Bezugsposition erfassen.

3. Vorrichtung nach einem der Ansprüche 1 und 2, **dadurch gekennzeichnet, dass** die Steuermittel (MC) eingerichtet sind, um in dem Fall des Entriegelns der Drehung der Rückenlehne (DS) jedes automatische Gleiten des Sitzes (SI) zu untersagen, wenn die Erfassungsmittel (C1, C2) die Rückenlehne (DS) weder in ihrer ersten Bezugsposition noch in ihrer zweiten Bezugsposition erfassen.

4. Vorrichtung nach einem der Ansprüche 1 bis 3, **dadurch gekennzeichnet, dass** die Erfassungsmittel (C1, C2) erste (C1) und zweite (C2) Sensoren aufweisen, die eingerichtet sind, um zu erfassen, wenn die Rückenlehne (DS) jeweils in ihrer ersten und zweiten Bezugsposition ist.

5. Vorrichtung nach Anspruch 4, **dadurch gekennzeichnet, dass** der erste Sensor (C1) des sogenannten Kontakttyps ist, der dazu bestimmt ist, fest auf der Rückseite der Sitzfläche (AS) an einer ersten ausgewählten Stelle befestigt zu werden und in einen ersten Zustand versetzt werden kann, wenn er von einem Element (E), das fest an einem unteren Endteil (PID) der Rückenlehne (DS) befestigt ist, deshalb kontaktiert wird, dass diese Letztere (DS) in ihrer ersten Bezugsposition ist, und in einen zweiten Zustand, wenn sie von dem Element (E) nicht kontaktiert wird.

6. Vorrichtung nach einem der Ansprüche 4 und 5, **dadurch gekennzeichnet, dass** der zweite Sensor (C2) des sogenannten Kontakttyps ist, der dazu bestimmt ist, fest auf der Rückseite der Sitzfläche (AS) an einer zweiten ausgewählten Stelle befestigt zu werden und in einen ersten Zustand versetzt werden kann, wenn er von einem Element (E), das fest an einem unteren Endteil (PID) der Rückenlehne (DS) befestigt ist, deshalb kontaktiert wird, dass diese Letztere (DS) in ihrer zweiten Bezugsposition ist, und in einen zweiten Zustand, wenn er von dem Element (E) nicht kontaktiert wird.

7. Vorrichtung nach einem der Ansprüche 5 und 6, **dadurch gekennzeichnet, dass** das Element (E) ein Schaft ist, der ein erstes Ende aufweist, das fest mit einer Rotationsachse verbunden ist, die selbst fest mit dem unteren Endteil (PID) der Rückenlehne (DS) verbunden ist, und ein zweites Ende, das dem ersten Ende gegenüber liegt und den ersten Sensor (C1) und/oder den zweiten Sensor (C2) kontaktieren kann.

8. Vorrichtung nach einem der vorhergehenden Ansprüche, **dadurch gekennzeichnet, dass** das automatische Gleiten automatisch von einem Elektromotor ohne Gleitsteuerung seitens eines Benutzers angetrieben wird.

9. Verfahren zum Steuern des Gleitens eines herunterklappbaren Sitzes (SI) eines Fahrzeugs, das eine Sitzfläche (AS) mit gesteuertem Gleiten und eine Rückenlehne (DS) aufweist, die mit gesteuerter Drehung auf der Sitzfläche (AS) montiert ist und nach dem Entriegeln in ihrer Drehung frei zwischen einer ersten ausgewählten Bezugsposition, in der sie aufgerichtet ist, und einer zweiten Bezugsposition, in der sie nach vorn heruntergeklappt ist, angetrieben werden kann, **dadurch gekennzeichnet, dass** es darin besteht, i) die Position zu bestimmen, in der die Rückenlehne (DS) platziert ist, und ii) in dem Fall des Entriegelns der Drehung der Rückenlehne (DS) nur das automatische Gleiten des Sitzes (SI) jeweils nach vorn und nach hinten nur zu gestatten, wenn die Rückenlehne (DS) nur in ihrer zweiten beziehungsweise ersten Bezugsposition erfasst wird.

10. Verfahren nach Anspruch 9, **dadurch gekennzeichnet, dass** man bei ii) in dem Fall des Entriegelns der Drehung der Rückenlehne (DS) jedes automatische Gleiten des Sitzes (SI) untersagt, wenn die Rückenlehne (DS) aufgrund eines Erfassungsversagens gleichzeitig in ihrer ersten Bezugsposition und in ihrer zweiten Bezugsposition erfasst wird.

11. Verfahren nach einem der Ansprüche 9 und 10, **dadurch gekennzeichnet, dass** man bei ii) in dem Fall des Entriegelns der Drehung der Rückenlehne (DS) jedes automatische Gleiten des Sitzes (SI) untersagt, wenn sich die Rückenlehne (DS) weder in ihrer ersten Bezugsposition noch in ihrer zweiten Bezugsposition befindet.

12. Einsatz der Steuervorrichtung (D) nach einem der Ansprüche 1 bis 8 und des Steuerverfahrens nach einem der Ansprüche 9 bis 11 für die Steuerung des automatischen Gleitens eines herunterklappbaren Sitzes (SI) eines Kraftfahrzeugs.
